(19) Europäisches Patentamt
European Patent Office
Office européen des brevets

(11) Veröffentlichungsnummer: **0 000 745**
**B1**

(12) # EUROPÄISCHE PATENTSCHRIFT

(45) Veröffentlichungstag der Patentschrift: **15.07.81**

(21) Anmeldenummer: **78100531.9**

(22) Anmeldetag: **28.07.78**

(51) Int. Cl.$^3$: **C 07 C 103/46,**
C 07 C 91/04, C 07 B 19/00
//C07C101/72

(54) **Salz eines optischen isomeren Phenyl-glycins und eines optischen isomeren 2-Aminobutanols, Verfahren zu deren Herstellung.**

(30) Priorität: **09.08.77 DE 2735834**

(43) Veröffentlichungstag der Anmeldung:
**21.02.79 Patentblatt 79/4**

(45) Bekanntmachung des Hinweises auf die Patenterteilung:
**15.07.81 Patentblatt 81/28**

(84) Benannte Vertragsstaaten:
**BE CH DE FR GB NL SE**

(56) Entgegenhaltungen:
**AT - A - 334 345**
**FR - A - 2 107 926**

(73) Patentinhaber: **HOECHST AKTIENGESELLSCHAFT**
**Postfach 80 03 20**
**D-6230 Frankfurt/Main 80 (DE)**

(72) Erfinder: **Chae, Yung Bog, Dr.**
**Korea Institute of Science and Technology**
**Seoul (KR)**
Erfinder: **Kim, Dae Whang**
**Korea Institute of Science and Technology**
**Seoul (KR)**

**EP 0 000 745 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Salz eines optischen isomeren Phenyl-glycins und eines optischen isomeren 2-Aminobutanols, Verfahren zu deren Herstellung

Die vorliegende Erfindung betrifft die Trennung in optische Antipoden von Verbindungen der Formel I

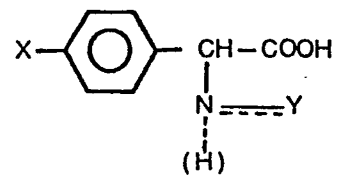

(I)

worin X H, OH, $C_1$—$C_4$-Alkoxy, Aryloxy, $C_1$—$C_4$-Acyloxy, Aralkyloxy, das gegebenenfalls. mit höchstens 3 Halogenatomen oder Nitrogruppen substituiert ist und höchstens 4 Kohlenstoffatome im Alkylrest enthält, tert.-Alkoxy mit einem tertiären an das Sauerstoffatom gebundenen Kohlenstoffatom, Alkoxycarbonyloxy oder Picolyloxycarbonyloxy bedeutet und Y aliphatisches Acyl, das gegebenenfalls substituiert sein kann mit bis zu 3-Halogenatomen oder das weitere Carbonylgruppen enthalten kann, gegebenenfalls halogen-substituiertes Aroyl, oder Alkyl, Alkoxy, Nitro, Phthalyl, Trityl, gegebenenfalls alkyl-, alkoxy- oder halogen-substituiertes Benzyliden, Acetylisopropyliden, Benzoylisopropyliden, 5,5-Dimethyl-3-oxo-cyclohexen-1-yl, Trichlorethyloxycarbonyl, Benzyloxycarbonyl, gegebenenfalls alkyl-, alkoxy- oder halogensubstituiert oder substituiert mit einer Nitrogruppe oder —$B(OH)_2$, tert.-Alkoxy mit einem tertiären Kohlenstoffatom, das an das Sauerstoffatom gebunden ist, Adamantyloxycarbonyl, Diphenylisopropyloxycarbonyl, Fluorenyl-9-methyloxycarbonyl, Methylsulfonylethyloxycarbonyl, 3,5-Dimethoxyphenylisopropyloxycarbonyl, Isobornyloxycarbonyl, Nitrophenylsulfenyl, Tosyl, Dibenzylphosphoryl, Diphenylphosphin oder Trimethylsilyl bedeutet.

Die optisch aktiven Verbindungen der genannten Formel werden als Ausgangsmaterial für die Produktion von halbsynthetischen Antibiotika des Cephalosporin oder Penicellin-Typs, beispielsweise Ampicillin oder Amoxycillin eingesetzt. Die Erfindung betrifft ein neues Verfahren zur Herstellung der optisch aktiven Verbindungen der obigen Formel unter Einsatz von optisch aktivem 2-Aminobutanol.

In einem bekannten Verfahren zur Trennung von Verbindungen in optische Isomere der obigen Formel wurden optisch aktive natürliche Amine, wie Cinchonidin oder Dehydroabiethylamin (vgl. FR-A 2107926), eingesetzt. Doch diese natürlichen Amine sind sehr teuer, und die Trennungsausbeuten sind niedrig. Hinzu kommt noch der weitere Nachteil, daß eine Wiedergewinnung dieser natürlichen Amine zum weiteren Gebrauch begrenzt ist, weil ein Teil dieser Amine während des Trennungsverfahrens, das mit hohen Temperaturen durchgeführt wird, zerstört wird. In der AT—PS 334 345 werden Salze aus optischen Isomeren von N-Acylderivaten von Dimethoxyphenylalanin und 2-Aminobutanol beschrieben. Die Ausbeuten sind ebenfalls gering. Gemäß der Erfindung wird die Aminogruppe der Aminosäure oder eines ihrer Derivate substituiert, um die Acidität der Aminosäure zu erhöhen. Diese Derivate der Aminosäuren bilden mit 2-Aminobutanol leichter die entsprechenden Salze als die Aminosäuren selbst. Die Salze werden im allgemeinen in Wasser oder einem niederen Alkanol, vorzugsweise Methanol, Äthanol oder Isopropanol hergestellt, wobei eines der beiden Salze ausfällt, die ausgehend von einer racemischen Verbindung der Formel I und optisch aktivem 2-Aminobutanol gebildet werden können.

Das erfindungsgemäße Verfahren ist bekannten Verfahren darin überlegen, daß die optische Reinheit höher als 99% liegt und höhere Ausbeuten erhalten werden.

Gegebenenfalls werden die Aminosäure-Derivate in die Aminosäuren umgewandelt oder in eine Aminosäure, die entweder noch an der Aminogruppe oder am Phenylring substituiert ist. Die Erfindung wird durch die folgenden Beispiele erläutert.

### Beispiel 1

Salz von 1-N,O-Diacetyl-4-hydroxy-phenylglycin und 1-2-Aminobutanol.

Zu einer Suspension von dl-Diacetyl-4-hydroxy-phenylglycin (47,5 g) in 400 ml Äthanol, wurde 1-2-Aminobutanol (18 g) unter Rühren gegeben. Die Reaktionsmischung wurde langsam bis zur Auflösung erwärmt, worauf auf Raumtemperatur abgekühlt und 2 Stunden stehengelassen wurde, um die Ausfällung des Salzes zu vervollständigen. Das Salz wurde durch Filtrieren abgetrennt und ergab ein Rohprodukt (30 g). Durch Umkristallisieren aus 80 ml Äthanol wurde das reine Salz aus 1-N,O-Diacetyl-4-hydroxy-phenylglycin und 1-2-Aminobutanol erhalten.

Fp. 168—170° C und $(\alpha)_D^{25} = -126°$ (C=2, $H_2O$).

1-4-Hydroxyphenylglycin

Das gemäß obiger Arbeitsweise erhaltene Salz wurde in bekannter Weise behandelt, um 1-4-Hydroxyphenylglycin mit einer optischen Reinheit ($[\alpha]_D^{25} = -159°$ (C=2, N—HCl) von mehr als 99% zu erhalten.

### Beispiel 2

Salz von 1-N-Acetyl-4-methoxy-phenylglycin mit 1-2-Aminobutanol.

Zu einer Suspension von 1-N-Acetyl-4-methoxy-phenylglycin (4,46 g) in 15 ml abs. Methanol wurde 1-2-Aminobutanol (1,8g) gegeben. Es wurde wie in Beispiel 1 verfahren und ein rohes Salz (3,1 g) von 1-N-Acetyl-4-methoxy-phenylglycin mit 1-2-Aminobutanol erhalten. Das reine Salz wurde durch Umkristallisieren aus 5 ml abs. Methanol erhalten. 2,5 g (80%) $[\alpha]_D^{25} = -107°$ (C=2, $H_2O$).

**Patentansprüche**

1. Salz, bestehend aus einem optischen Isomeren einer Verbindung der Formel I

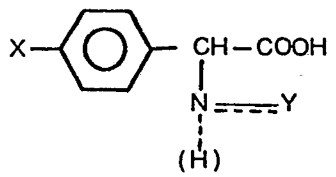

(I)

worin X H, OH, $C_1$—$C_4$-Alkoxy, Aryloxy, $C_1$—$C_4$-Acyloxy, Aralkyloxy, das gegebenenfalls mit höchstens 3 Halogenatomen oder Nitrogruppen substituiert ist und höchstens 4 Kohlenstoffatome im Alkylrest enthält, tert.-Alkoxy mit einem tertiären an das Sauerstoffatom gebundenen Kohlenstoffatom, Alkoxycarbonyloxy oder Picolyloxycarbonyloxy bedeutet und Y aliphatisches Acyl, das gegebenenfalls substituiert sein kann mit bis zu 3 Halogenatomen oder das weitere Carbonylgruppen enthalten kann, gegebenenfalls halogensubstituiertes Aroyl, oder Alkyl, Alkoxy, Nitro, Phthalyl, Trityl, gegebenenfalls alkyl-, alkoxy- oder halogen-substituiertes Benzyliden, Acetylisopropyliden, Benzoylisopropyliden, 5-5-Dimethyl-3-oxo-cyclohexen-1-yl, Trichlorethyloxycarbonyl, Benzyloxycarbonyl gegebenenfalls alkyl-, alkoxy-, halogen-substituiert oder substituiert mit einer Nitrogruppe oder $—B(OH)_2$ tert.-Alkoxy mit einem tertiären Kohlenstoffatom, das an das Sauerstoffatom gebunden ist, Adamantyloxycarbonyl, Diphenylisopropyloxycarbonyl, Fluorenyl - 9 - methyloxycarbonyl, Methylsulfonylethyloxycarbonyl, 3,5 - Dimethoxyphenylisopropyloxycarbonyl, Isobornyloxycarbonyl, Nitrophenylsulfenyl, Tosyl, Dibenzylphosphoryl, Diphenylphosphin oder Trimethylsilyl und einem optischen Isomeren von 2-Aminobutanol.

2. Verfahren zur Herstellung eines Salzes gemäß Anspruch 1, dadurch gekennzeichnet, daß man die racemische Form einer Verbindung der Formel I mit einem optischen Isomeren von 2-Aminobutanol umsetzt und das Salz eines optischen Isomeren einer Verbindung der Formel I mit dem optischen Isomeren von 2-Aminobutanol abfiltriert.

**Claims**

1. The salt consisting of an optical isomer of a compound of the formula I

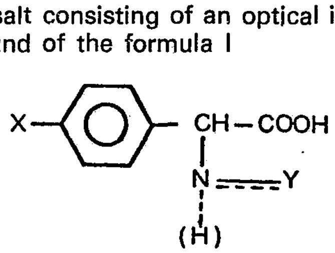

(I)

in which X is H, OH, $C_1$—$C_4$ alkoxy, aryloxy, $C_1$—$C_4$ acyloxy, aralkyloxy optionally substituted with a maximum of 3 halogen atoms or nitro groups with a maximum of 4 carbon atoms in the alkyl moiety; tertiary-alkoxy with a tertiary carbon atom bound to the oxygen; alkoxy-carbonyloxy or picolyloxy-carbonyloxy and Y is aliphatic acyl optionally substituted by up to 3 halogen atoms or containing further carbonyl groups; aroyl optionally substituted by halogen; alkyl, alkoxy or nitro, phthalyl, trityl; benzyliden, optionally substituted by alkyl, alkoxy or halogen; acetylisopropyliden, benzoylisopropyliden, 5,5-dimethyl-3-oxo-cyclohexen-1-yl, trichlorethyloxycarbonyl; benzyloxycarbonyl optionally substituted by alkyl, alkoxy, halogen, nitro or $—B(OH_2)$; tertiary alkoxy with a tertiary carbon atom bound to the oxygen; adamantyloxycarbonyl, diphenylisopropyloxy-carbonyl, fluorenyl-9-methyloxy-carbonyl, methylsulfonylethyloxy-carbonyl, 3,5-dimethoxyphenylisopropyloxy-carbonyl, isobornyloxycarbonyl, nitrophenylsulfenyl, tosyl, dibenzylphosphoryl, diphenylphosphin or trimethylsilyl, and an optical isomer of 2-aminobutanol.

2. A process for the preparation of a salt according to claim 1 which comprises reacting the racemic form of a compound of the formula I with an optical isomer of 2-aminobutanol and separating by filtration the salt of an optical isomer of a compound of the formula I with the optical isomer of 2-aminobutanol.

**Revendications**

1. Sel, composé d'un isomère optique d'un composé de formule I

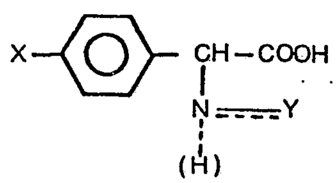

(I)

dans laquelle X représente H, OH, ou un groupe alcoxy en $C_1$—$C_4$, aryloxy, acyloxy en $C_1$—$C_4$, aralkyloxy qui est éventuellement substitué avec au plus 3 atomes d'halogène ou groupes nitro et contient au plus 4 atomes de carbone dans le radical alkyle, alcoxy tertiaire avec un atome de carbone tertiaire lié à l'atome d'oxygène, alcoxycarbonyloxy ou un picolyloxycarbonyloxy, et Y représente un groupe acyle aliphatique qui peut être éventuellement substitué avec jusqu'à 3 atomes d'halogène ou qui peut contenir d'autres groupes carbonyle, aroyle éventuellement substitué par un halogène, ou alkyle, alcoxy, nitro, phtalyle, trityle, benzylidène éventuellement substitué avec un alkyle, un alcoxy ou un halogène, acétylisopropylidène, un benzoylisopropylidène, 5,5-diméthyl-3-oxo-cyclohexène-1-yl, trichloroéthyloxycarbonyle, benzyloxycarbonyle éventuellement substitué avec un alkyle, un alcoxy, un halogène ou substitué avec

un groupe nitro ou —$B(OH)_2$, alcoxy tertiaire avec un atome de carbone tertiaire qui est lié à l'atome d'oxygène, adamantyloxycarbonyle, diphénylisopropyloxycarbonyle, fluorényl-9-méthyloxycarbonyle, méthylsulfonyléthyloxy-carbonyle, 3,5-diméthoxyphénylisopropyloxy-carbonyle, isobornyloxycarbonyle, nitrophényl-sulfényle, tosyle, dibenzylphosphoryle, diphényl-phosphine ou triméthylsilyle, et d'un isomére optique du 2-aminobutanol.

2. Procédé de préparation d'un sel selon la revendication 1, caractérisé en ce qu'on fait réagir la forme racémique d'un composé de formule I avec un isomère optique de 2-aminobutanol et on sépare par filtration le sel d'un isomère optique d'un composé de formule I avec l'isomère optique du 2-aminobutanol.